(19) Europäisches Patentamt / European Patent Office / Office européen des brevets

(11) **EP 4 235 534 A1**

(12) **EUROPEAN PATENT APPLICATION**

(43) Date of publication:
**30.08.2023   Bulletin 2023/35**

(21) Application number: **22212777.1**

(22) Date of filing: **12.12.2022**

(51) International Patent Classification (IPC):
*G06Q 10/04* *(2023.01)*

(52) Cooperative Patent Classification (CPC):
**G06Q 10/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **25.02.2022   JP 2022027886**

(71) Applicant: **TOYOTA JIDOSHA KABUSHIKI
KAISHA
Aichi-Ken 471-8571 (JP)**

(72) Inventors:
• **SUGAI, Tomotaka
  Aichi-ken, 471-8571 (JP)**
• **KAWAMURA, Yoshiumi
  Aichi-ken, 471-8571 (JP)**
• **TANIGUCHI, Makoto
  Aichi-ken, 471-8571 (JP)**

(74) Representative: **D Young & Co LLP
120 Holborn
London EC1N 2DY (GB)**

(54) **DEMAND FORECASTING SYSTEM, LEARNING SYSTEM, DEMAND FORECASTING METHOD, LEARNING METHOD, AND NON-TRANSITORY STORAGE MEDIUM**

(57)   A demand forecasting system (10) obtains first forecasting data indicating a representative demand forecasting value of a provision target for each cluster by executing a time series clustering process, extracting trend component data for each cluster, and calculating pattern data. The demand forecasting system (10) obtains second forecasting data that is data indicating a forecasting value of a difference for each provision target and obtains third forecasting data indicating a demand forecasting value for each provision target.

FIG. 1

EP 4 235 534 A1

**Description**

BACKGROUND OF THE INVENTION

1. Field of the Invention

The present disclosure relates to a demand forecasting system, a learning system, a demand forecasting method, a learning method, and a non-transitory storage medium.

2. Description of Related Art

Japanese Unexamined Patent Application Publication No. 2021-57010 (JP 2021-57010 A) describes a forecasting system that performs forecasting based on time series data in the past.

SUMMARY OF THE INVENTION

In the technology described in JP 2021-57010 A, clustering is performed on the smoothed actual results and a forecasting device is created for each cluster, so information on short-term variations included in time series data is missing at the time of forecasting, thereby highly precise forecasting cannot be made. Further, in the technology described in JP 2021-57010 A, clustering a plurality of time series with different scales is not assumed.

The present disclosure provides a demand forecasting system, a demand forecasting method, and a non-transitory storage medium capable of forecasting a demand for a provision target that is a commodity or a service with sufficient precision, in consideration of variations in different time series scales with respect to a plurality of types of provision targets, and also provides a learning system, a learning method, and a non-transitory storage medium capable of generating a learning model used for the forecasting as described above.

A demand forecasting system of a first aspect of the present disclosure includes a processor configured as follows. The processor is configured to: input, regarding a provision target that is a commodity or a service, actual result data including the number of time series actual demand results for each of a plurality of types of provision targets and execute a time series clustering process on the input actual result data for each provision target; execute, for each cluster classified by the time series clustering process, an extraction process of extracting trend component data of the cluster from the actual result data; execute, for each cluster, a pattern calculation process of calculating pattern data indicating a demand pattern for a predetermined period by performing a statistical process on first data that is data remaining after the trend component data is extracted from the actual result data for the predetermined period; execute, for each cluster, a first forecasting process of obtaining first forecasting data indicating a representative demand forecasting value of the provision target belonging to the cluster for each cluster by calculating a sum of the pattern data and the trend component data; input, for each provision target, a difference between the actual result data of the provision target and the first forecasting data for the cluster to which the provision target belongs, in a learning model in which a regression learning is performed on the difference for the provision target, and execute a second forecasting process of obtaining second forecasting data that is data indicating a forecasting value of the difference for each provision target; and obtain third forecasting data that is data indicating a demand forecasting value for each provision target by calculating a sum of the first forecasting data and the second forecasting data for each provision target.

According to the first aspect of the present disclosure, it is possible to forecast a demand for a provision target that is a commodity or a service with sufficient precision, in consideration of variations in different time series scales with respect to the types of provision targets.

In the first aspect of the present disclosure, the processor may be configured as follows. The processor may be configured to execute, for each cluster, a determination process of determining whether a trend component is included in extracted data that is data obtained after the trend component data is extracted in the extraction process, and execute, when a determination is made that a trend component is included for at least one of the clusters as a result of the determination process, the time series clustering process and the extraction process on the extracted data instead of the actual result data, until a determination is made in the determination process that a trend component is not included, and the pattern calculation process may use data remaining after the trend component data is extracted from the extracted data instead of the actual result data as the first data at a stage when a determination is made in the determination process that a trend component is not included, and calculate the pattern data by performing the statistical process on the first data for the predetermined period.

In the first aspect of the present disclosure, the predetermined period may be a period in which start date and end date are represented in days or months within a year, and the statistical process may be a process of calculating a statistical value of the first data for the predetermined period in the first data for a predetermined number of years, for each cluster.

In the first aspect of the present disclosure, the first forecasting process may include an approximation process of approximating the trend component data, which is extracted in the extraction process, to a polynomial, and may be a process of obtaining the first forecasting data for each cluster by calculating a sum of the pattern data and data indicated by the polynomial for each cluster.

In the first aspect of the present disclosure, data after standardization for the types of provision targets may be used in the time series clustering process, the extraction process, and the pattern calculation process as the actual result data, and data before the standardization may be used in the second forecasting process as the actual result data.

In the first aspect of the present disclosure, the provision targets may be any one of parts that constitute one or a plurality of products, predetermined quantities of materials that are used in a case of manufacturing one or a plurality of products, products that belong to one or a plurality of product groups, and services that belong to one or a plurality of service groups.

A learning system of a second aspect of the present disclosure includes a processor configured as follows. The processor configured to: input, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and execute a regression learning of the regression learning model and update the regression learning model such that the regression learning model becomes a model that inputs the difference and outputs a forecasting value of the difference for a predetermined period during operation, in which the first forecasting data is obtained, as data indicating a representative demand forecasting value of the provision target belonging to the cluster for each cluster, by executing, for each cluster, an extraction process of extracting trend component data of the cluster from the actual result data, by executing, for each cluster, a pattern calculation process of calculating pattern data indicating a demand pattern for a predetermined period by performing a statistical process on first data that is data remaining after the trend component data is extracted from the actual result data for the predetermined period, and by executing, for each cluster, a first forecasting process of calculating a sum of the pattern data and the trend component data.

According to the second aspect of the present disclosure, it is possible to generate a learning model used in a demand forecasting system capable of forecasting a demand of a provision target that is a commodity or a service with sufficient precision, in consideration of variations in different time series scales with respect to the types of provision targets.

In the second aspect of the present disclosure, the predetermined period may be a period in which start date and end date are represented in days or months within a year, and the statistical process may be a process of calculating a statistical value of the first data for the predetermined period in the first data for a predetermined number of years, for each cluster.

In the second aspect of the present disclosure, data after standardization for the types of provision targets may be used in the time series clustering process, the extraction process, and the pattern calculation process as the actual result data, and a difference, which is calculated by using data before the standardization, may be used for the difference, which is input to the regression learning model, as the actual result data.

In the second aspect of the present disclosure, the provision targets may be any one of parts that constitute one or a plurality of products, predetermined quantities of materials that are used in a case of manufacturing one or a plurality of products, products that belong to one or a plurality of product groups, and services that belong to one or a plurality of service groups.

A demand forecasting method of a third aspect of the present disclosure includes: inputting, regarding a provision target that is a commodity or a service, actual result data including the number of time series actual demand results for each of a plurality of types of provision targets and executing a time series clustering process on the input actual result data for each provision target; executing, for each cluster classified by the time series clustering process, an extraction process of extracting trend component data of the cluster from the actual result data; executing, for each cluster, a pattern calculation process of calculating pattern data indicating a demand pattern for a predetermined period by performing a statistical process on first data that is data remaining after the trend component data is extracted from the actual result data for the predetermined period; executing, for each cluster, a first forecasting process of obtaining first forecasting data indicating a representative demand forecasting value of the provision target belonging to the cluster for each cluster by calculating a sum of the pattern data and the trend component data; inputting, for each provision target, a difference between the actual result data of the provision target and the first forecasting data for the cluster to which the provision target belongs, in a learning model in which a regression learning is performed on the difference for the provision target, and executing a second forecasting process of obtaining second forecasting data that is data indicating a forecasting value of the difference for each provision target; and obtaining third forecasting data that is data indicating a demand forecasting value for each provision target by calculating a sum of the first forecasting data and the second forecasting data for each provision target.

According to the third aspect of the present disclosure, it is possible to forecast a demand for a provision target that is a commodity or a service with sufficient precision, in consideration of variations in different time series scales with respect to the types of provision targets.

A learning method of a fourth aspect of the present disclosure includes: inputting, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and executing a regression learning of the regression learning model and updating the regression learning model such that the regression learning model becomes a model that inputs the difference and outputs a forecasting value of the difference for a predetermined period during operation, in which the first forecasting data is obtained, as data indicating a representative demand forecasting value of the provision target belonging to the cluster for each cluster, by executing, for each cluster, an extraction process of extracting trend component data of the cluster from the actual result data, by executing, for each cluster, a pattern calculation process of calculating pattern data indicating a demand pattern for a predetermined period by performing a statistical process on first data that is data remaining after the trend component data is extracted from the actual result data for the predetermined period, and by executing, for each cluster, a first forecasting process of calculating a sum of the pattern data and the trend component data.

According to the fourth aspect of the present disclosure, it is possible to generate a learning model used in the demand forecasting system capable of forecasting a demand for a provision target that is a commodity or a service with sufficient precision, in consideration of variations in different time series scales with respect to the types of provision targets.

A fifth aspect of the present disclosure relates to a non-transitory storage medium storing instructions executable by one or more processors and causing the one or more processors to perform the following functions. The non-transitory storage medium performs inputting, regarding a provision target that is a commodity or a service, actual result data including the number of time series actual demand results for each of a plurality of types of provision targets and executing a time series clustering process on the input actual result data for each provision target; executing, for each cluster classified by the time series clustering process, an extraction process of extracting trend component data of the cluster from the actual result data; executing, for each cluster, a pattern calculation process of calculating pattern data indicating a demand pattern for a predetermined period by performing a statistical process on first data that is data remaining after the trend component data is extracted from the actual result data for the predetermined period; executing, for each cluster, a first forecasting process of obtaining first forecasting data indicating a representative demand forecasting value of the provision target belonging to the cluster for each cluster by calculating a sum of the pattern data and the trend component data; inputting, for each provision target, a difference between the actual result data of the provision target and the first forecasting data for the cluster to which the provision target belongs, in a learning model in which a regression learning is performed on the difference for the provision target, and executing a second forecasting process of obtaining second forecasting data that is data indicating a forecasting value of the difference for each provision target; and executing a demand forecasting process of obtaining third forecasting data that is data indicating a demand forecasting value for each provision target by calculating a sum of the first forecasting data and the second forecasting data for each provision target.

According to the fifth aspect of the present disclosure, it is possible to forecast a demand for a provision target that is a commodity or a service with sufficient precision, in consideration of variations in different time series scales with respect to the types of provision targets.

A sixth aspect of the present disclosure relates to a non-transitory storage medium storing instructions executable by one or more processors and causing the one or more processors to perform the following learning processes. The non-transitory storage medium is configured to: input, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and execute a regression learning of the regression learning model and update the regression learning model such that the regression learning model becomes a model that inputs the difference and outputs a forecasting value of the difference for a predetermined period during operation, in which the first forecasting data is obtained, as data indicating a representative demand forecasting value of the provision target belonging to the cluster for each cluster, by executing, for each cluster, an extraction process of extracting trend component data of the cluster from the actual result data, by executing, for each cluster, a pattern calculation process of calculating pattern data indicating a demand pattern for a predetermined period by performing a statistical process on first data that is data remaining after the trend component data is extracted from the actual result data for the predetermined period, and by executing, for each cluster, a first forecasting process of calculating a sum of the pattern data and the trend component data.

According to the sixth aspect of the present disclosure, it is possible to generate a learning model used in the demand forecasting system capable of forecasting a demand for a provision target that is a commodity or a service with sufficient precision, in consideration of variations in different time series scales with respect to the types of provision targets.

According to the aspects of the present disclosure, it is possible to provide a demand forecasting system, a demand forecasting method, and a non-transitory storage medium capable of forecasting a demand for a provision target that is a commodity or a service with sufficient precision, in consideration of variations in different time series scales with respect to a plurality of types of provision targets, and also provide a learning system, a learning method, and a non-transitory storage medium capable of generating a learning model used for the forecasting as described above.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG 1 is a block diagram showing an example of a configuration of a demand forecasting system according to the present embodiment;

FIG 2 is a flowchart for describing an example of a global forecasting process in a demand forecasting process executed by the demand forecasting system in FIG 1;

FIG 3 is a flowchart for describing an example of a forecasting process for each part in the demand forecasting process executed by the demand forecasting system in FIG 1;

FIG 4 is a diagram showing an example of variables used in the forecasting process for each part in FIG 3;

FIG 5 is a graph showing an example of the results of a time series clustering process in the global forecasting process in FIG 2;

FIG 6 is a graph showing an example of the results of the time series clustering process in the global forecasting process in FIG 2;

FIG 7 is a graph showing an example of the results of the time series clustering process in the global forecasting process in FIG 2;

FIG 8 is a graph showing an example of an annual demand pattern calculated in the global forecasting process in FIG 2;

FIG 9 is a graph showing an example of the annual demand pattern calculated in the global forecasting process in FIG 2;

FIG 10 is a graph showing an example of a forecasting result of a certain part calculated in the forecasting process for each part in FIG 3;

FIG 11 is a graph showing an example of a forecasting result of another certain part calculated in the forecasting process for each part in FIG 3;

FIG 12 is a block diagram showing an example of a configuration of a learning system that generates a learning model used in the demand forecasting system according to the present embodiment;

FIG 13 is a flowchart for describing an example of a learning process in the learning system in FIG 12; and

FIG 14 is a diagram showing an example of a hardware configuration of a device.

DETAILED DESCRIPTION OF EMBODIMENTS

Hereinafter, although the present disclosure will be described through embodiments of the invention, the disclosure according to the scope of claims is not limited to the following embodiments. Moreover, not all the configurations described in the embodiments are desired as a method for solving the problem.

Embodiment

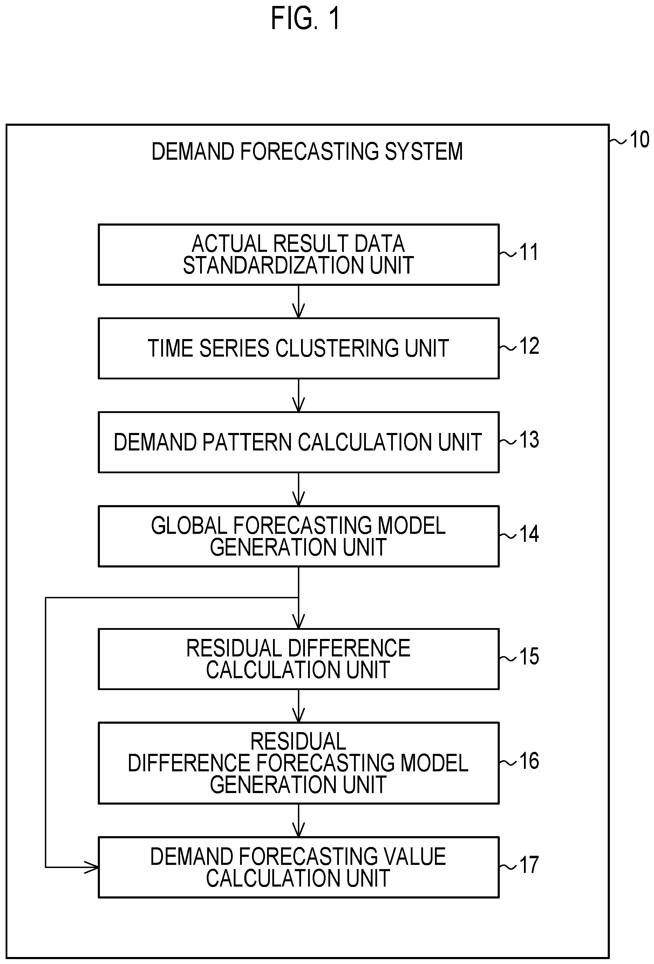

An example of a configuration of a demand forecasting system according to the present embodiment will be described with reference to FIGS. 1 to 11. First, an example of a configuration of a demand forecasting system according to the present embodiment will be described with reference to FIG 1. FIG 1 is a block diagram showing an example of a configuration of a demand forecasting system (hereinafter, the present system) according to the present embodiment.

The present system 10 shown in FIG 1 forecasts a demand for a provision target, which is a commodity or a service. In the following description, the parts such as each of parts in engine, seat parts, driving operation unit parts, and control device parts, which constitute one or a plurality of products such as one or a plurality of types of automobiles, will be described as the provision targets. Examples of the part include at least one of a part desired for a newly sold product and a part (a service part) that is replaced at the time when repair or periodic maintenance is performed. Other examples of the provision targets will be described later as alternative examples.

As shown in FIG 1, the present system 10 can be provided with an actual result data standardization unit 11, a time series clustering unit 12, a demand pattern calculation unit 13, a global forecasting model generation unit 14, a residual difference calculation unit 15, a residual difference forecasting model generation unit 16, and a demand forecasting value calculation unit 17.

The present system 10 can be provided with each of the units 11 to 17 as a controller. The controller, for example, can be implemented by an integrated circuit and can be implemented by a processor such as a central processing unit (CPU), a working memory, a non-volatile storage device, or the like, for example. A control program to be executed by the processor is stored in the storage device, and the processor can perform functions of each of the units 11 to 17 by loading the program into the working memory and executing the program.

The actual result data standardization unit 11 inputs actual result data including the number of time series actual demand results for each of a plurality of types of parts, standardizes the input actual result data for each input part, and passes the standardized actual result data to the time series clustering unit 12. The actual result data to be input may be desired that the number of actual results such as sales or reservations of the parts is associated with information such as identification information indicating the parts as time series data. Further, in order to execute processes for the types of parts, the information such as the identification information indicating the parts may include identification information indicating other types of parts to be taken into consideration or group names to be taken into consideration.

The time series clustering unit 12 executes a time series clustering process on the actual result data for each part received from the actual result data standardization unit 11, that is, the actual result data for each part after the standardization, and passes the actual result data for each part to the demand pattern calculation unit 13. Any method for the time series clustering process may be used.

The demand pattern calculation unit 13 executes an extraction process of extracting trend component data of a cluster from the actual result data after the standardization for each cluster that is classified by the time series clustering process performed by the time series clustering unit 12, and passes the extracted trend component data to the global forecasting model generation unit 14. The trend component data to be extracted can include trend component data indicating a long-term trend.

Further, the demand pattern calculation unit 13 executes, for each cluster, a pattern calculation process of calculating pattern data by performing a statistical process on first data that is data remaining after the trend component data is extracted from the actual result data after the standardization for a predetermined period, and passes the calculated pattern data to the global forecasting model generation unit 14. The pattern data to be calculated is data indicating a demand pattern for the predetermined period. Any type of statistical process can be used.

The global forecasting model generation unit 14 executes a first forecasting process of obtaining first forecasting data by calculating the sum of the pattern data and the trend component data for each cluster with respect to the received trend component data and pattern data, and passes the first forecasting data to the residual difference calculation unit 15 and the demand forecasting value calculation unit 17.

The first forecasting data that can be obtained by the global forecasting model generation unit 14 is data indicating a representative demand forecasting value of a part belonging to the cluster for each cluster. The representative demand forecasting value refers to a common demand forecasting value for the part in the cluster. The trend component data to be extracted as described above can include trend component data indicating a long-term trend, thereby the first forecasting data can include forecasting data indicating long-term forecasting results.

The residual difference calculation unit 15 calculates, for each part, a difference between the actual result data before the standardization of the part and the first forecasting data for the cluster to which the part belongs, and passes the difference to the residual difference forecasting model generation unit 16.

The residual difference forecasting model generation unit 16 performs regression learning on the difference (residual difference) for each part that is received from the residual difference calculation unit 15 and generates a residual difference forecasting model (a residual difference model). However, in the present system 10, the residual difference forecasting model generation unit 16 can also be configured separately, and also the demand forecasting value calculation unit 17 can refer to the residual difference model generated in advance to execute a second forecasting process, which will be described later.

The demand forecasting value calculation unit 17 inputs the residual difference for each part that is received from the residual difference calculation unit 15 to the residual difference model, and executes the second forecasting process of obtaining second forecasting data. The second forecasting data is data indicating a forecasting value of the residual difference for each part and is data indicating the forecasting value of the residual difference (a forecasting error value) that may occur in the future for each part. Particularly, the second forecasting data can include data indicating a forecasting value of a residual difference that may occur in the future in the short term for each part.

The demand forecasting value calculation unit 17 obtains third forecasting data by calculating the sum of the first forecasting data and the second forecasting data for each part, based on the second forecasting data and the first forecasting data received from the global forecasting model generation unit 14. The third forecasting data to be obtained is data indicating a demand forecasting value for each part.

Further, as shown in the example in which the present system 10 includes the actual result data standardization unit 11, data, which is standardized for the types of parts, can be used as the actual result data in the time series clustering process, the extraction process, and the pattern calculation process. At this time, the data before the standardization can be used as actual result data in the residual difference calculation process and the second forecasting process. As described above, in the second forecasting process, the residual difference, which is input to the residual difference model, can use the difference, which is calculated by using the data before the standardization as the actual result data.

The standardization of the actual result data does not have to be performed inside the present system 10, and in this case, performing the processes as illustrated becomes possible in a case where an input unit that inputs the actual result data after the standardization and the actual result data before the standardization is included in the demand forecasting system. Of course, it is possible to assume a situation in which the standardization of the actual result data for each part, among the types of parts to be targeted is not desired, and in that case, actual result data that is not standardized can be used in all processes.

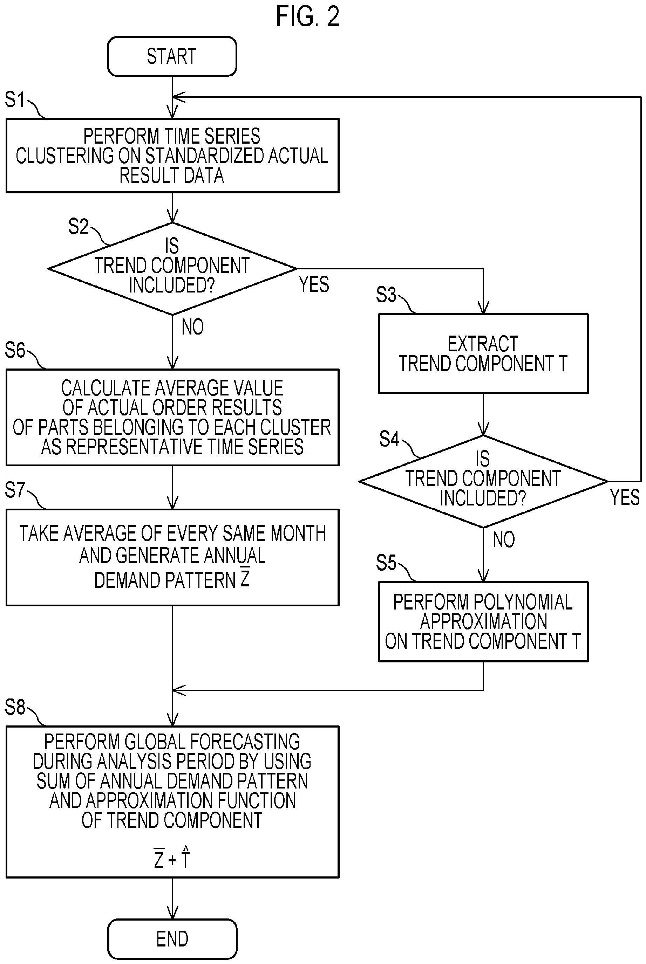

Specific examples of the processes in each of the units 11 to 17 will be described below with reference to FIGS. 2 to 11. In the present embodiment, by employing the configuration as described above, it is possible to forecast with sufficient precision for a demand for the parts in consideration of variations in different time series scales with respect to the types of the parts.

Specific examples of the processes in the present system 10 will be described. In the following description, it is assumed that the parts are single service part, but even in a case where the parts are new sales parts, both service parts and new sales parts are included in the parts, and the basic process is the same. Further, examples of annual processes will be shown below. That is, in the following examples of the processes, a predetermined period is a period in which start date and end date are represented in days or months within a year, and an example is shown that the statistical process is a process of calculating a statistical value of the first data for the predetermined period in the first data for a predetermined number of years, for each cluster. However, the predetermined period and the statistical process are not limited to the above example, and an appropriate predetermined period or a statistical process may be selected depending on the provision target. When the predetermined period is a period represented in months, for example, the first day of the start month can be set as the start date and the first day or the last day of the end month can be set as the end date, or the middle day (for example, 16th) of the start month can be set as the start date and the middle day (for example, 15th) of the end month can be set as the end date. However, specific days in a designated month may be set in advance as the start date and end date, not limited to the above-mentioned days.

As can be seen from the description in FIG 1, the process in the present system 10 can be a two-stage hierarchical process composed of a global forecasting process and a forecasting process for a single part.

In the global forecasting process, for example, similarity of time series is calculated, a cluster-centered demand pattern is calculated as representative information for each cluster by classifying time series data into several clusters with similar feature quantities such as periodicity due to seasonal variations, and demand forecasting that captures global characteristics from the demand pattern is performed.

The forecasting process for a single part considers the characteristics with respect to a single part. That is, in the forecasting process for a single part, for example, modeling is performed on a residual difference between the demand forecasting and the actual result based on the characteristics obtained by the time series clustering process. In the forecasting process for a single part, the demand forecasting for a single part is performed by taking the sum of the global forecasting result obtained in the global forecasting process and the forecasting result in residual difference.

First, details of an example of the global forecasting process will be described with reference to FIG 2. FIG 2 is a flowchart for describing an example of the global forecasting process in the demand forecasting process executed by the present system 10.

For the parts, a noise component that is called random walk is present in addition to periodic variations due to seasonality of one year (12 months) and short-term periodic variations. Therefore, as a global forecasting process, similar parts are aggregated, noise is removed by taking the average, and the aggregated demand trend is used for forecasting.

First, the time series clustering unit 12 executes the time series clustering process of performing time series clustering on the standardized actual result data (step S1). In the time series clustering process, parts having similar time series change with each other are classified into the same group. As an example, an example of performing the time series clustering process by using the Ward method will be provided. However, a clustering method for the time series data is not limited to the Ward method. For example, the shortest distance method or group average method using differences in distance functions for measuring similarity can also be applied. Further, as the clustering method for the time series data, a non-hierarchical method such as the Kmeans method can also be applied. In the present embodiment, an example is provided in which the Ward method, which does not require setting the number of clusters in advance and has high classification sensitivity, is used.

The ward method is analyzed in the following steps.

1. The number of data is defined as N, and N clusters, each containing solely one data, are created.
2. The clusters are defined as Ci, $C_2$ and a distance function similarity of the clusters is defined as $d(C_1, C_2)$.
3. Two clusters having the smallest $d(C_1, C_2)$ are merged.
4. A hierarchical structure dendrogram is created by analyzing sequentially until all targets become in two clusters.

In the Ward method, a distance function $d(C_1, C_2)$ is defined as shown in Equation (1) below. However, in Equation (1), E(Ci) is defined by Equation (2). Here, ci represents the center of gravity of Ci and the overline of y represents the standardized time series, and E(Ci) is obtained using a Euclidean distance D used as a distance between vectors with ci as a reference.

$$d(C_1, C_2) = E(C_1 \cup C_2) - E(C_1) - E(C_2) \quad \cdots (1)$$

$$E(C_1) = \sum_{\overline{y} \in C_1} (D(\overline{y}, c_1))^2 \quad \cdots (2)$$

Next, the time series clustering unit 12 determines whether a trend component is included by executing trend component extraction and polynomial approximation (step S2), and performs extraction of the trend component T when the trend component is included, that is, when YES is determined in step S2 (step S3).

When the time series clustering unit 12 determines that the trend component is included in step S2, the time series clustering unit 12 performs a process in step S3 and then checks the content of the determination as desired (step S4), and when the trend component is included, that is, when YES is determined in step S4, the time series clustering unit 12 returns to step S1 and performs the time series clustering process again. As described above, in the present system 10, since the characteristics of periodic variations such as seasonality are extracted as demand patterns, the extraction of the trend component is performed on the clusters including the trend component, which is obtained from the result of the time series clustering process, and the time series clustering process is performed again.

Therefore, the present system 10 performs decomposition of the time series data. In general, the time series data U can be defined as an additive formula with T as a trend, S as a seasonal variation, and R as a surplus term. Therefore, in the present embodiment, extraction of the trend component T is performed by using a seasonal decomposition of time series by loess (STL) that can decompose the time series data U into each of T, S, and R. Compared to other decomposition methods, the STL decomposition does not need to constrain seasonal variations, is robust to outliers, and enables robust decomposition. Therefore, it is significant for the time series data of spare parts that includes unexpected actual order results. However, in the present embodiment, decomposition of the time series data can be performed by using a method other than the STL decomposition, and in particular, when the predetermined period is different from the example described here, it is possible to perform decomposition corresponding to the predetermined period.

When NO is determined in step S4, the time series clustering unit 12 performs the polynomial approximation on the extracted trend component T and calculates an approximate expression (step S5). The reason for performing such a calculation is that extrapolation is desired to forecast future demand. Here, as an example, it is assumed that a cubic polynomial regression is performed and an approximation function is calculated, but the present disclosure is not limited to the example.

As described above, in the present system 10, it is possible to execute the determination process of determining whether a trend component is included in the extracted data that is data obtained after the trend component data is extracted in the extraction process, for each cluster. Thereafter, in the present system 10, when a determination is made that a trend component is included for at least one cluster as a result of the determination process, the time series clustering process and the extraction process are executed with respect to the extracted data instead of the actual result data, until a determination is made in the determination process that a trend component is not included.

When NO is determined in step S2, that is, when the extraction of the trend component is ended, the demand pattern calculation unit 13 generates a demand pattern. In the demand pattern generation process, for example, a time series that represents each cluster is found and utilized from the obtained results of the time series clustering process.

Various methods such as a method of calculating a time series that minimizes the total dissimilarity with time series in other clusters in the distribution within the cluster, or a method of using an average value within a cluster as a representative time series can be employed as a method of calculating the demand pattern, for example.

In the present embodiment, as an example, the demand pattern calculation unit 13 calculates the average value of the actual order results of parts belonging to each cluster as a representative time series (step S6), and takes an average of every same month from the representative time series and calculates an annual demand pattern (the overline of Z) by using the following Equation (3) (step S7).

$$\overline{Z}_{k,m} = \frac{1}{L}\sum_{l=1}^{L}\frac{1}{N_k}\sum_{i=1}^{N_k}\overline{y}_{i,k,l,m} \quad \cdots (3)$$

Where, k is a cluster number, 1 is a year, m is a month, L is the number of years of a learning period, and $N_k$ is a part number of a part belonging to the cluster. Further, the overline of $y_{i,k,l,m}$ represents a real value of standardized time series data belonging to the cluster.

As described above, the demand pattern calculation unit 13 can use data remaining after the trend component data is extracted from the extracted data instead of the actual result data as the first data at a stage when a determination is made in the determination process that a trend component is not included, and calculate the pattern data by performing the statistical process on the first data for the predetermined period, as the pattern calculation process.

At a stage when the processes of steps S5 and S7 are ended, finally, the global forecasting model generation unit 14 performs a global demand forecasting for each part during the analysis period by using the sum of the annual demand pattern (the overline of Z) and the approximation function (the circumflex ($\wedge$) of T) of the trend component (step S8) and then the global forecasting process is ended.

As described above, the first forecasting process that is a global forecasting process can include an approximation process of approximating the trend component data, which is extracted in the extraction process, to a polynomial, and obtain the first forecasting data for each cluster by calculating a sum of the pattern data and data indicated by the polynomial for each cluster.

In the global forecasting process described above, long-term linear dependence and periodic seasonal variations of service parts can be represented, and forecasting that considers similar parts is possible. However, it is difficult to forecast future demand for a single part with sufficient precision. The reason for the difficulty is that there are differences in the demand characteristics for each part, such as differences in seasonal variations between one month and two months or a mixture of shorter variations.

Therefore, the present system 10 performs the second forecasting process described above and the calculation process of the sum of the first forecasting data and the second forecasting data, as the forecasting process for a single part. Specifically, in the present system 10, modeling is performed on the difference between the global forecasting, which is based on the sum of the polynomial regression of the trend and the annual demand pattern, and each actual result of each part, as the forecasting process for a single part.

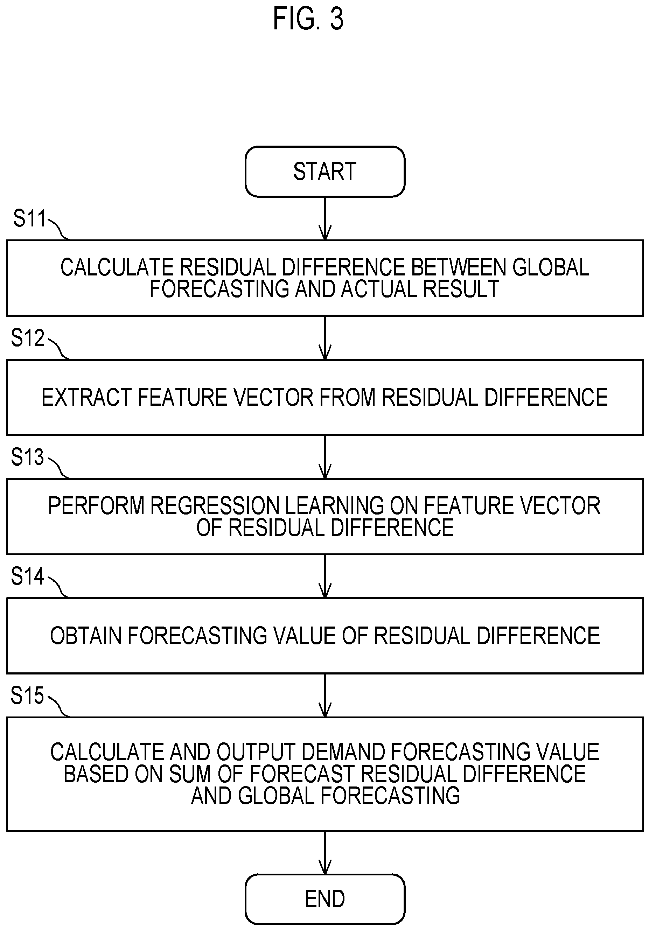

Details of an example of the forecasting process for a single part will be described below with reference to FIGS. 3 to 11. FIG 3 is a flowchart for describing an example of the forecasting process for each part in the demand forecasting process executed by the present system 10.

First, the residual difference calculation unit 15 calculates a difference (a residual difference) between the global forecasting and the actual result (step S11). The residual difference $e_{i,m}$ can be defined, for example, by the following Equation (4). Where, $y_{i,m}$ is an actual order result, and the overline of $Z_k$ is an annual demand pattern obtained by using the clustering. Further, the circumflex ($\wedge$) of $T_i$ here is a trend component forecast by the polynomial regression, and each is returned to the value before standardization.

$$e_{i,m} = y_{i,m} - \left\{\sigma_i\left(\overline{Z}_k + \hat{T}_i\right) + \mu_i\right\} \quad \cdots (4)$$

$$e_{i,m} = f(x_1, x_2, \cdots, x_n) \qquad \cdots (5)$$

$$\hat{y}_{i,m} = \left\{ \sigma_i \left( \overline{Z}_k + \hat{T}_i \right) + \mu_i \right\} + \hat{e}_{i,m} \quad \cdots (6)$$

Next, the residual difference forecasting model generation unit 16 inputs a residual difference for each part, which is received from the residual difference calculation unit 15, to a residual difference forecasting model (residual difference model). The residual difference model is a feature extraction process of extracting a feature vector from the residual difference and is a learning model for performing a regression learning on the extracted feature vector. The residual difference forecasting model generation unit 16 extracts a feature vector of the residual difference from the input residual difference (step S12) and updates the residual difference model by performing the regression learning on the feature vector of the residual difference (step S13).

The residual difference model can be defined as Equation (5) above. Where, f is a function in which a residual difference is set as a forecasting target. A neural network, a gradient boosting tree, or the like can be used as the function f, but it is not limited to the above examples.

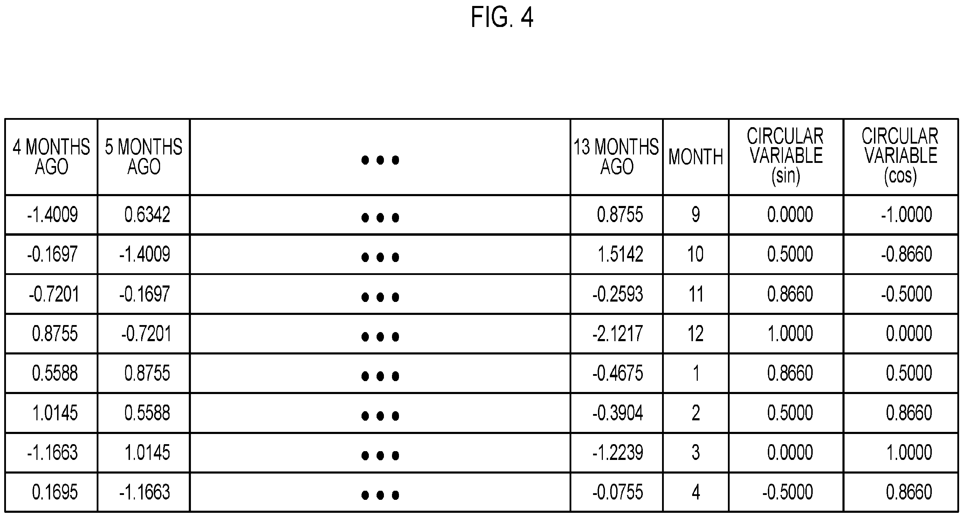

Further, $x_n$ defines time terms such as past residual difference or a month. Further, x1, x2, $\cdots$, $x_n$ can have design variables as illustrated in FIG 4, for example. FIG 4 is a diagram showing an example of variables used in the forecasting process for each part in FIG 3. In FIG 4, the past residual difference actual results from 4 months to 13 months ago are set as design variables, and the number of months and values obtained by converting the number of months to circular variables by using a trigonometric function are set in order to use a relationship between the actual result and time as a feature quantity (a feature vector).

Next, the demand forecasting value calculation unit 17 inputs the residual difference of the part to be a target to the residual difference model and obtains a forecasting value of the residual difference (step S14). Next, the demand forecasting value calculation unit 17 calculates and outputs a demand forecasting value of the part by calculating a sum of the forecasting value of the residual difference that is the forecast residual difference and the global forecasting value (step S15), and the process is ended. When the forecasting value in Equation (5) is defined as the circumflex ($\wedge$) of $e_{i,m}$, the final demand forecasting value to be output can be expressed by Equation (6) above.

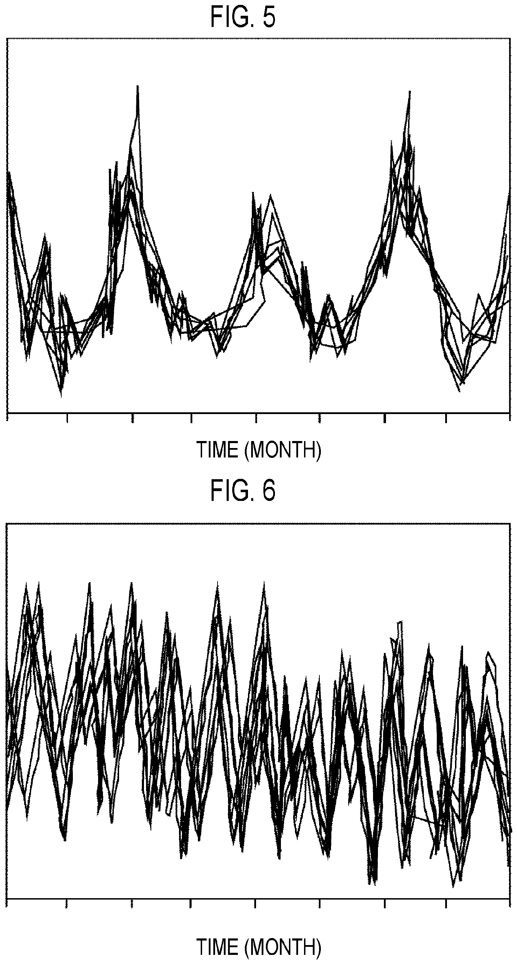

Next, the results obtained by performing the demand forecasting for a certain service part in the present system 10 will be described with reference to FIGS. 5 to 11. As an application example, the time series clustering process is performed on the substantially 9000 service parts, which are seasonal variations, and the demand forecasting is executed for 910 service parts, which is substantially 10% of the 9000 service parts.

First, examples of the demand forecasting results will be given with reference to FIGS. 5 to 9. FIGS. 5 to 7 are diagrams showing an example of the results of the time series clustering process in the global forecasting process in FIG 2, and FIGS. 8 and 9 are diagrams showing an example of an annual demand pattern calculated in the global forecasting process in FIG 2. In FIGS. 5 to 9, the horizontal axis indicates a time period (a scale is in units of 6 months), and the vertical axis indicates the number of orders (the number of orders after standardization) for each part in the cluster. In FIGS. 5 to 9, for the sake of simplification, much more than 910 pieces of data are omitted, and the data is shown in a deformed state such that the state of the data can be qualitatively understood.

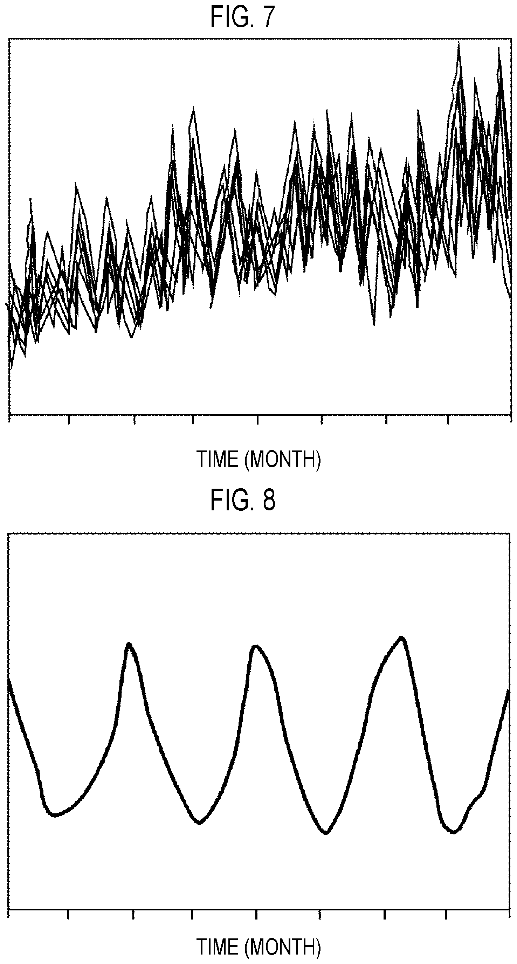

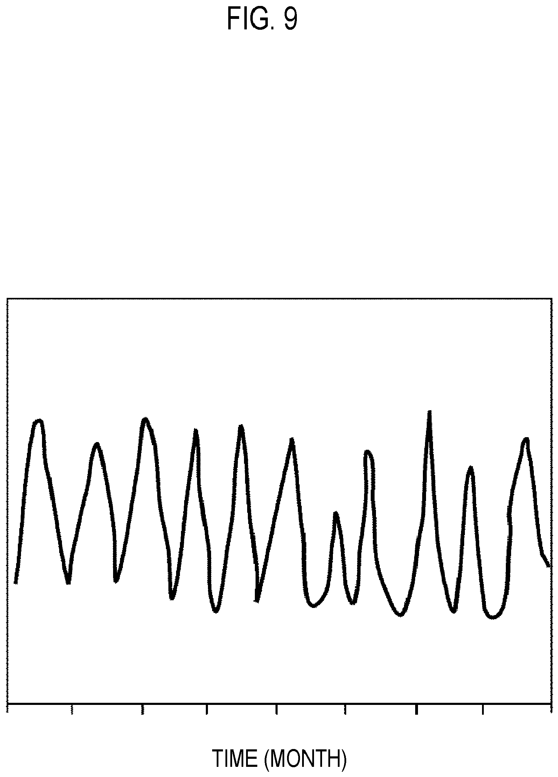

First, it can be seen that a total of three clusters shown in each of FIGS. 5 to 7 are generated by performing the time series clustering process on the time series actual result data after the standardization. As a result of calculating the annual demand pattern by extracting the trend component from the cluster shown in FIG 5, it can be seen that a demand pattern as indicated by the solid line in FIG 8 is generated. It can be seen that a trend component is not present in the cluster when the comparison is made between FIG 5 and FIG 8. On the other hand, as a result of calculating the annual demand pattern by extracting the trend component from the cluster shown in FIG 6, it can be seen that a demand pattern as indicated by the solid line in FIG 9 is generated. In FIG 6, there is an overall right-downward trend (trend component), but it can be seen that FIG 9 shows a state after the trend component is extracted.

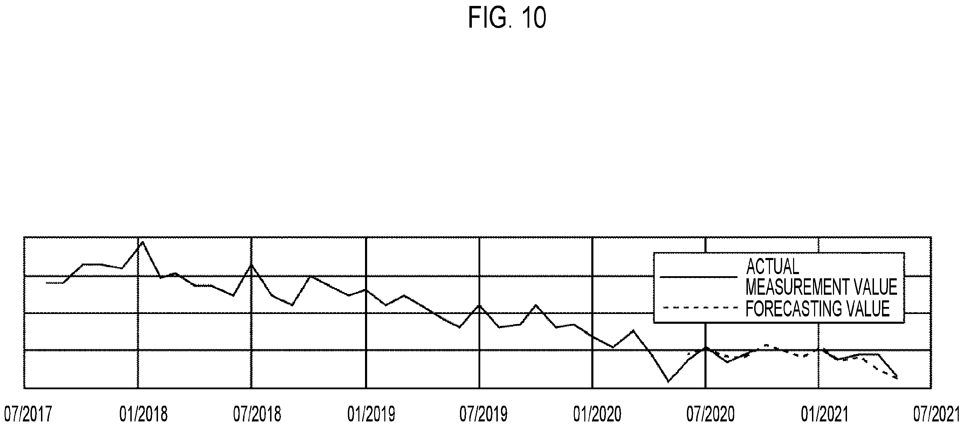

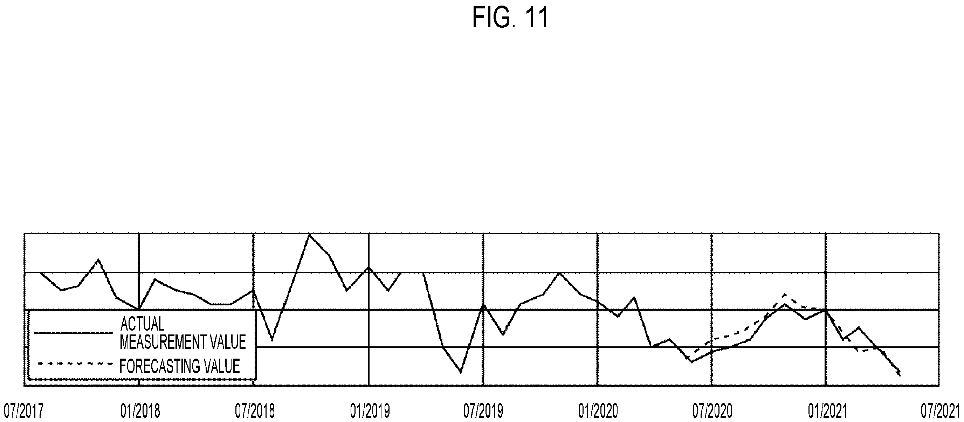

Next, the residual difference is calculated, the residual difference model is built, and the precision verification is performed. The results will be described with reference to FIGS. 10 and 11. FIG 10 is a diagram showing an example of forecasting results of a certain part calculated in the forecasting process for each part in FIG 3, and FIG 11 is a diagram showing an example of forecasting results of another certain part calculated in the forecasting process for each part in FIG 3. In FIGS. 10 and 11, the horizontal axis indicates a time period (in units of 6 months), the vertical axis indicates the number of orders, the solid line shows the actual number of orders, and the dotted line shows the forecast number of orders.

As the design variables, as shown in FIG 4, past residual difference actual results from 4 months to 13 months ago are set. As the design variables, the number of months and values obtained by converting the number of months to circular variables by using the trigonometric function are set in order to use a relationship between the actual result and time as a feature quantity.

Further, in this example, in order to evaluate the generalization performance of the residual difference model, the forecasting period is divided into three as indicated by the following CV1, CV2, and CV3, and time series cross-validation is performed. In CV1, a learning period is set from August 2017 to May 2020, and a test period is set from June 2020 to September 2020. In CV2, a learning period is set from August 2017 to September 2020, and a test period is set from October 2020 to January 2021. In CV3, a learning period is set from August 2017 to January 2021, and a test period is set from February 2021 to May 2021.

Further, the following Equation (7) is used for an evaluation index. By using Equation (7), it is possible to calculate a forecasting error standardized by an average of the actual results for the past one year from the forecasting month.

$$Error = \frac{\hat{y}_i - y_i}{\frac{1}{12}\sum_{i=i-12}^{i-1} y_i} \quad \cdots (7)$$

Next, an allowable error Error is defined as $-0.3 \leq Error \leq 0.5$, and evaluation is performed based on the ratio of the number of parts in which forecasting precision is within an allowable error range in all test periods, out of the 910 parts, which are set as the forecasting targets. The allowable error is set within the above range since the range is equivalent to the error after human correction, the risk of shortage is reduced, and it is possible to manage up to the appropriate inventory number +50 even when there is excess inventory.

As a comparison target, the forecasting results obtained by building a regression model for each single part are used. As a result of the evaluation, it has been clarified that the precision of demand forecasting performed by the present system 10 is improved whereas the accuracy rate of the method of the comparison target is 0%, and that forecasting within the allowable error range is possible for 26.7% of all parts. In FIGS. 10 and 11, although the forecasting results for two parts that can be forecasted within the allowable error range by executing the demand forecasting performed by the present system 10, are shown, it can be seen that the demand forecasting can be executed with high forecasting precision in any cases.

As described above, according to the present embodiment, it is possible to forecast the demand for parts with sufficient precision, in consideration of variations in different time series scales with respect to the types of parts. More specifically, according to the present embodiment, for a single part, it is possible to forecast demand in consideration of long-term trends, periodic variations due to seasons or the like for the demand for the types of parts, and the future demand also can be forecast with sufficient precision by considering the demand characteristics of a single part.

Effects of the present embodiment will be considered for an example of a specific application scene of the present embodiment. For example, regarding the service parts, in order to gain the trust of customers, it is desired to replace parts due to manufacturing responsibility, and it is also desired to supply parts in a timely manner in response to parts replacement due to accidents or periodic consumable replacement. Service parts have trend components due to secular changes and also has periodic variations such as seasonal variations. Further, periodicity or a noise component that is shorter than the seasonality is present depending on the characteristics of each part. Therefore, it is desired to forecast the number of monthly demands with high precision for appropriate inventory management. However, due to these problems, it may be difficult to accurately forecast demand for individual parts including short-term time series variations, or demand characteristics with different scales may not be accurately clustered.

On the other hand, in the present embodiment, in order to use the information on similar characteristics between parts, a forecast method of combining the global forecasting that extracts the demand characteristics with respect to the standardized time series data by clustering and the forecasting by modeling the residual difference in a single part of each cluster, is used. That is, in the present embodiment, the forecasting is performed for each part by extracting a trend component and calculating a demand pattern for each part having a high similarity in demand characteristics, by performing the global demand forecasting, and by defining the unique characteristics of each service part as forecasting targets based on a residual difference between the result of the global demand forecasting and the actual result. Therefore, in the present embodiment, it is possible to reduce the possibility that accurate forecasting is difficult and the possibility that accurate clustering cannot be performed due to the above problems, and the risk of the shortage of the service parts or excess inventory can be reduced.

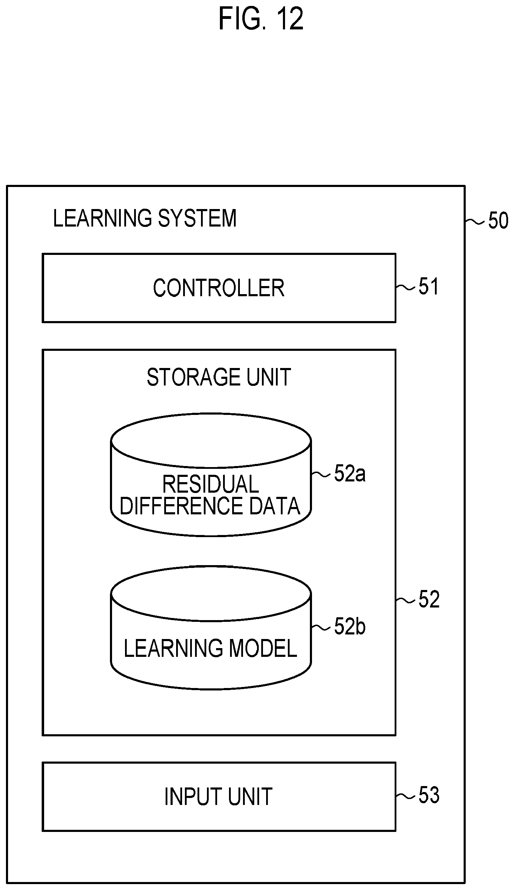

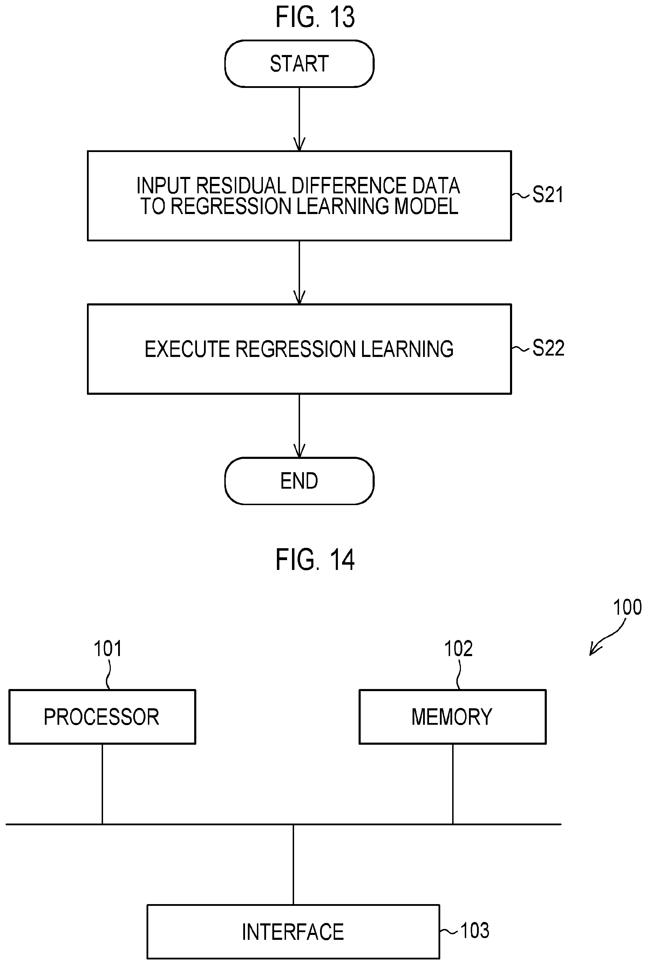

Next, an example of a learning system that generates the above-described learning model (residual difference model) will be described with reference to FIGS. 12 and 13. FIG 12 is a block diagram showing an example of a configuration of the learning system that generates a learning model used in the demand forecasting system 10. Further, FIG 13 is a flowchart for describing an example of a learning process in the learning system in FIG 12.

As shown in FIG 12, the learning system 50 can include a controller 51, a storage unit 52, and an input unit 53. The learning system 50 is an example of a system described as the residual difference forecasting model generation unit 16 in FIG 1 and can be generated by using a computer such as a PC for artificial intelligence (AI) learning, for example. However, the learning system 50 may be configured with a single device or may be configured by distributing functions to a plurality of devices.

The controller 51 controls the entire learning system 50. The controller 51, for example, can be implemented by an integrated circuit and can be implemented by a processor such as a CPU, a working memory, a non-volatile storage device, or the like, for example. A control program to be executed by the processor is stored in the storage device, and the processor can perform functions of the controller 51 by loading the program into the working memory and executing the program. The control program can include a learning program for executing learning. The storage unit 52 can also be used as a storage device.

The storage unit 52 is a storage device that stores residual difference data 52a that is data indicating a residual difference and a learning model 52b, and the residual difference data 52a and the learning model 52b can be stored in the storage unit 52 in the form of a database, for example. The input unit 53 inputs a data set desired for learning and at least the residual difference data 52a, and stores the data set and the residual difference data 52a in the storage unit 52 such that the reference can be made during the learning. When the learning includes learning having a teacher, the residual difference data 52a desirably includes correct data.

As shown in FIG 13, first, the processes, which are performed by the learning system 50, are performed by the controller 51 inputting the residual difference data 52a from the input unit 53 (step S21) and executing the regression learning (step S22). For example, the controller 51 can read the residual difference data 52a during learning, execute learning based on the learning model 52b, and update the learning model 52b.

The learning model 52b and the regression learning, which is performed by the learning model 52b, operate as described with reference to FIG 3, and it is sufficient that the learning model, which is used in the second forecasting process, can be generated. Although the detailed description is omitted, the controller 51 executes the following processes.

The controller 51 inputs a residual difference between the actual result data including the number of time series actual demand results for each of the types of parts and the first forecasting data that is data indicating a representative demand forecasting value (a representative demand forecasting value of a part), which is obtained for each cluster classified by executing the time series clustering process on the actual result data for each part, for a cluster to which the part belongs, in the regression learning model. Thereafter, the controller 51 executes the regression learning of the regression learning model and updates the regression learning model. The update is executed such that the regression learning model becomes a model that inputs the residual difference and outputs a forecasting value of the residual difference for the predetermined period during the operation.

As described above, the first forecasting data is obtained, as data indicating a representative demand forecasting value of the part belonging to the cluster for each cluster, by executing the extraction process, the pattern calculation process, and the first forecasting process. The extraction process is a process of extracting, for each cluster, the trend component data of the cluster from the actual result data. The pattern calculation process is a process of calculating pattern data indicating a demand pattern for the predetermined period by performing the statistical process on first data that is data remaining after the trend component data is extracted from the actual result data for the predetermined period, for each cluster. The first forecasting process is a process of calculating the sum of the pattern data and the trend component data for each cluster.

With such a configuration, the learning system 50 can generate a learning model used in the demand forecasting system capable of forecasting with sufficient precision, for the demand for parts, in consideration of variations in different time series scales with respect to the types of parts.

Alternative Examples

In the present embodiment, regarding the provision target, automobiles are used as an example for the parts constituting one or a plurality of products, but the products are not limited to automobiles. Any kind of products may be used, such as other kinds of devices, other kinds of household goods, other kinds of food products, and the like. For example, when the product is confectionery, the parts include ingredients of the confectionery, packaging, and the like.

Further, in the present embodiment, parts constituting one or a plurality of products are exemplified as provision targets. For example, the provision targets can be any one of (a) parts that constitute one or a plurality of products, (b) predetermined quantities of materials that are used in a case of manufacturing one or a plurality of products, (c) products that belong to one or a plurality of product groups, and (d) services that belong to one or a plurality of service groups.

As the above (b), for example, a case where manufacturing one or a plurality of products such as one type or a plurality of types of automobiles can be used, and for example, a predetermined quantities of materials, such as an 18-liter can of paint, can be exemplified. Examples of the above (c) include products belonging to one or a plurality of product groups such as chocolate confectionery, and examples of products in this case include almond chocolate, bar chocolate, and specifically, products can be distinguished by product names. As the above (d), for one or a plurality of service groups, such as a service group for transporting people, services belonging to one or the plurality of service groups can be exemplified, and the services in this case include, for example, trains, express trains, buses, and taxis. As a result, for example, it is possible to forecast demand for services using mobility as a service (MaaS) vehicle. Of course, various examples other than the examples described above can be applied to the above (a) to (d).

Moreover, the learning system described above and also the demand reservation system described above can be built as a system in which functions are distributed over a plurality of devices at random, or can be built as a single device. Any of the plurality of devices or the single device described above can have, for example, the following hardware configuration. FIG 14 is a diagram showing an example of a hardware configuration of the device as described above.

Any device 100 shown in FIG 14 may include a processor 101, a memory 102, and an interface 103. For example, when the device 100 is a computer, the interface 103 can include an interface with an operation device that receives user operations, an interface with a display device that displays information, a communication interface for sending and receiving information, and the like.

The processor 101 may be, for example, a microprocessor, a micro processor unit (MPU), or a CPU. The processor 101 may include a plurality of processors. The memory 102 is configured with, for example, a combination of volatile memory and non-volatile memory. The functions of the plurality of devices or the single device described above are implemented by the processor 101 reading a control program stored in the memory 102 and executing the control program while exchanging desired information via the interface 103.

The program includes an instruction set (or a software code) that causes the computer to perform one or a plurality of the functions described in the embodiments when the computer reads the program. The program may be stored in a non-transitory computer-readable medium or tangible storage medium. Examples having no limitation of the computer-readable medium or tangible storage medium include random-access memory (RAM), read-only memory (ROM), flash memory, a solid-state drive (SSD) or other memory technology, a CD-ROM, digital versatile disc (DVD), Blu-ray (registered trade-mark) disc or other optical disc storages, a magnetic cassette, a magnetic tape, a magnetic disc storage or other magnetic storage devices. The program may be transmitted on a transitory computer-readable medium or a communication medium. Examples having no limitation of the transitory computer-readable medium or the communication medium include electrical, optical, acoustic, or other forms of propagated signals.

The present disclosure is not limited to the present embodiment and can be modified as appropriate without departing from the scope of the disclosure.

**Claims**

1. A demand forecasting system (10) comprising a processor (101) configured to:

   input, regarding a provision target that is a commodity or a service, actual result data including the number of time series actual demand results for each of a plurality of types of provision targets and execute a time series clustering process on the input actual result data for each provision target;
   execute, for each cluster classified by the time series clustering process, an extraction process of extracting trend component data of the cluster from the actual result data;
   execute, for each cluster, a pattern calculation process of calculating pattern data indicating a demand pattern for a predetermined period by performing a statistical process on first data that is data remaining after the trend component data is extracted from the actual result data for the predetermined period;
   execute, for each cluster, a first forecasting process of obtaining first forecasting data indicating a representative demand forecasting value of the provision target belonging to the cluster for each cluster by calculating a sum of the pattern data and the trend component data;
   input, for each provision target, a difference between the actual result data of the provision target and the first forecasting data for the cluster to which the provision target belongs, in a learning model (52b) in which a regression learning is performed on the difference for the provision target, and execute a second forecasting process of obtaining second forecasting data that is data indicating a forecasting value of the difference for each provision target; and
   obtain third forecasting data that is data indicating a demand forecasting value for each provision target by calculating a sum of the first forecasting data and the second forecasting data for each provision target.

2.  The demand forecasting system (10) according to claim 1, wherein:

    the processor (101) is configured to

    execute, for each cluster, a determination process of determining whether a trend component is included in extracted data that is data obtained after the trend component data is extracted in the extraction process, and
    execute, when a determination is made that a trend component is included for at least one of the clusters as a result of the determination process, the time series clustering process and the extraction process on the extracted data instead of the actual result data, until a determination is made in the determination process that a trend component is not included; and

    the pattern calculation process uses data remaining after the trend component data is extracted from the extracted data instead of the actual result data as the first data at a stage when a determination is made in the determination process that a trend component is not included, and calculates the pattern data by performing the statistical process on the first data for the predetermined period.

3.  The demand forecasting system (10) according to claim 1 or 2, wherein:

    the predetermined period is a period in which start date and end date are represented in days or months within a year; and
    the statistical process is a process of calculating a statistical value of the first data for the predetermined period in the first data for a predetermined number of years, for each cluster.

4.  The demand forecasting system (10) according to any one of claims 1 to 3, wherein the first forecasting process includes an approximation process of approximating the trend component data, which is extracted in the extraction process, to a polynomial, and is a process of obtaining the first forecasting data for each cluster by calculating a sum of the pattern data and data indicated by the polynomial for each cluster.

5.  The demand forecasting system (10) according to any one of claims 1 to 4, wherein data after standardization for the types of provision targets is used in the time series clustering process, the extraction process, and the pattern calculation process as the actual result data, and data before the standardization is used in the second forecasting process as the actual result data.

6.  The demand forecasting system (10) according to any one of claims 1 to 5, wherein the provision targets are any one of

    parts that constitute one or a plurality of products,
    predetermined quantities of materials that are used in a case of manufacturing one or a plurality of products,
    products that belong to one or a plurality of product groups, and
    services that belong to one or a plurality of service groups.

7.  A learning system (50) comprising a processor (101) configured to:

    input, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and
    execute a regression learning of the regression learning model and update the regression learning model such that the regression learning model becomes a model that inputs the difference and outputs a forecasting value of the difference for a predetermined period during operation,
    wherein the first forecasting data is obtained, as data indicating a representative demand forecasting value of the provision target belonging to the cluster for each cluster,

    by executing, for each cluster, an extraction process of extracting trend component data of the cluster from the actual result data,
    by executing, for each cluster, a pattern calculation process of calculating pattern data indicating a demand pattern for a predetermined period by performing a statistical process on first data that is data remaining after the trend component data is extracted from the actual result data for the predetermined period, and by executing, for each cluster, a first forecasting process of calculating a sum of the pattern data and the trend component data.

**8.** The learning system (50) according to claim 7, wherein:

the predetermined period is a period in which start date and end date are represented in days or months within a year; and
the statistical process is a process of calculating a statistical value of the first data for the predetermined period in the first data for a predetermined number of years, for each cluster.

**9.** The learning system (50) according to claim 7 or 8, wherein data after standardization for the types of provision targets is used in the time series clustering process, the extraction process, and the pattern calculation process as the actual result data, and a difference, which is calculated by using data before the standardization, is used for the difference, which is input to the regression learning model, as the actual result data.

**10.** The learning system (50) according to any one of claims 7 to 9, wherein the provision targets are any one of

parts that constitute one or a plurality of products,
predetermined quantities of materials that are used in a case of manufacturing one or a plurality of products,
products that belong to one or a plurality of product groups, and
services that belong to one or a plurality of service groups.

**11.** A demand forecasting method comprising:

inputting, regarding a provision target that is a commodity or a service, actual result data including the number of time series actual demand results for each of a plurality of types of provision targets and executing a time series clustering process on the input actual result data for each provision target;
executing, for each cluster classified by the time series clustering process, an extraction process of extracting trend component data of the cluster from the actual result data;
executing, for each cluster, a pattern calculation process of calculating pattern data indicating a demand pattern for a predetermined period by performing a statistical process on first data that is data remaining after the trend component data is extracted from the actual result data for the predetermined period;
executing, for each cluster, a first forecasting process of obtaining first forecasting data indicating a representative demand forecasting value of the provision target belonging to the cluster for each cluster by calculating a sum of the pattern data and the trend component data;
inputting, for each provision target, a difference between the actual result data of the provision target and the first forecasting data for the cluster to which the provision target belongs, in a learning model (52b) in which a regression learning is performed on the difference for the provision target, and executing a second forecasting process of obtaining second forecasting data that is data indicating a forecasting value of the difference for each provision target; and
obtaining third forecasting data that is data indicating a demand forecasting value for each provision target by calculating a sum of the first forecasting data and the second forecasting data for each provision target.

**12.** A learning method comprising:

inputting, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and
executing a regression learning of the regression learning model and updating the regression learning model such that the regression learning model becomes a model that inputs the difference and outputs a forecasting value of the difference for a predetermined period during operation,
wherein the first forecasting data is obtained, as data indicating a representative demand forecasting value of the provision target belonging to the cluster for each cluster,

by executing, for each cluster, an extraction process of extracting trend component data of the cluster from the actual result data,
by executing, for each cluster, a pattern calculation process of calculating pattern data indicating a demand pattern for a predetermined period by performing a statistical process on first data that is data remaining after the trend component data is extracted from the actual result data for the predetermined period, and by executing, for each cluster, a first forecasting process of calculating a sum of the pattern data and the trend component data.

13. A non-transitory storage medium storing instructions that are executable by one or more processors (101) and that cause the one or more processors (101) to perform functions comprising:

inputting, regarding a provision target that is a commodity or a service, actual result data including the number of time series actual demand results for each of a plurality of types of provision targets and executing a time series clustering process on the input actual result data for each provision target;
executing, for each cluster classified by the time series clustering process, an extraction process of extracting trend component data of the cluster from the actual result data;
executing, for each cluster, a pattern calculation process of calculating pattern data indicating a demand pattern for a predetermined period by performing a statistical process on first data that is data remaining after the trend component data is extracted from the actual result data for the predetermined period;
executing, for each cluster, a first forecasting process of obtaining first forecasting data indicating a representative demand forecasting value of the provision target belonging to the cluster for each cluster by calculating a sum of the pattern data and the trend component data;
inputting, for each provision target, a difference between the actual result data of the provision target and the first forecasting data for the cluster to which the provision target belongs, in a learning model (52b) in which a regression learning is performed on the difference for the provision target, and executing a second forecasting process of obtaining second forecasting data that is data indicating a forecasting value of the difference for each provision target; and
executing a demand forecasting process of obtaining third forecasting data that is data indicating a demand forecasting value for each provision target by calculating a sum of the first forecasting data and the second forecasting data for each provision target.

14. A non-transitory storage medium storing instructions that are executable by one or more processors (101) and that cause the one or more processors (101) to perform learning processes comprising:

inputting, regarding a provision target that is a commodity or a service, a difference between actual result data including the number of time series actual demand results for each of a plurality of types of provision targets and first forecasting data that is data indicating a representative demand forecasting value, which is obtained for each cluster classified by executing a time series clustering process on the actual result data for each provision target, for a cluster to which the provision target belongs, in a regression learning model; and
executing a regression learning of the regression learning model and updating the regression learning model such that the regression learning model becomes a model that inputs the difference and outputs a forecasting value of the difference for a predetermined period during operation,
wherein the first forecasting data is obtained, as data indicating a representative demand forecasting value of the provision target belonging to the cluster for each cluster,

by executing, for each cluster, an extraction process of extracting trend component data of the cluster from the actual result data,
by executing, for each cluster, a pattern calculation process of calculating pattern data indicating a demand pattern for a predetermined period by performing a statistical process on first data that is data remaining after the trend component data is extracted from the actual result data for the predetermined period, and
by executing, for each cluster, a first forecasting process of calculating a sum of the pattern data and the trend component data.

# FIG. 1

DEMAND FORECASTING SYSTEM ~10

ACTUAL RESULT DATA
STANDARDIZATION UNIT ~11

TIME SERIES CLUSTERING UNIT ~12

DEMAND PATTERN CALCULATION UNIT ~13

GLOBAL FORECASTING MODEL
GENERATION UNIT ~14

RESIDUAL DIFFERENCE
CALCULATION UNIT ~15

RESIDUAL
DIFFERENCE FORECASTING MODEL
GENERATION UNIT ~16

DEMAND FORECASTING VALUE
CALCULATION UNIT ~17

# FIG. 2

```
                        ┌─────────────┐
                        │    START    │
                        └─────────────┘
                               │
S1 ┌──────────────────────────────────────────────┐
   │           PERFORM TIME SERIES                 │
   │   CLUSTERING ON STANDARDIZED ACTUAL           │
   │              RESULT DATA                      │
   └──────────────────────────────────────────────┘
                               │
S2                ◇ IS                      YES    S3 ┌──────────────────────┐
         TREND COMPONENT ────────────────────────────│        EXTRACT        │
            INCLUDED?                                 │   TREND COMPONENT T   │
                  │ NO                                └──────────────────────┘
S6 ┌──────────────────────────────┐                             │
   │   CALCULATE AVERAGE VALUE     │              S4      ◇ IS              YES
   │   OF ACTUAL ORDER RESULTS     │             TREND COMPONENT ──────────────
   │ OF PARTS BELONGING TO EACH    │                INCLUDED?
   │  CLUSTER AS REPRESENTATIVE    │                      │ NO
   │       TIME SERIES            │              S5 ┌──────────────────────┐
   └──────────────────────────────┘                 │ PERFORM POLYNOMIAL   │
                  │                                  │    APPROXIMATION     │
S7 ┌──────────────────────────────┐                 │ ON TREND COMPONENT T │
   │ TAKE AVERAGE OF EVERY SAME    │                 └──────────────────────┘
   │  MONTH AND GENERATE ANNUAL    │                            │
   │   DEMAND PATTERN Z̄            │
   └──────────────────────────────┘
                  │
S8 ┌──────────────────────────────┐
   │  PERFORM GLOBAL FORECASTING   │
   │ DURING ANALYSIS PERIOD BY     │
   │ USING SUM OF ANNUAL DEMAND    │
   │ PATTERN AND APPROXIMATION     │
   │  FUNCTION OF TREND COMPONENT  │
   │                               │
   │          Z̄ + T̂               │
   └──────────────────────────────┘
                  │
            ┌─────────────┐
            │     END     │
            └─────────────┘
```

**S1** PERFORM TIME SERIES CLUSTERING ON STANDARDIZED ACTUAL RESULT DATA

**S2** IS TREND COMPONENT INCLUDED? — YES / NO

**S3** EXTRACT TREND COMPONENT T

**S4** IS TREND COMPONENT INCLUDED? — YES / NO

**S5** PERFORM POLYNOMIAL APPROXIMATION ON TREND COMPONENT T

**S6** CALCULATE AVERAGE VALUE OF ACTUAL ORDER RESULTS OF PARTS BELONGING TO EACH CLUSTER AS REPRESENTATIVE TIME SERIES

**S7** TAKE AVERAGE OF EVERY SAME MONTH AND GENERATE ANNUAL DEMAND PATTERN $\bar{Z}$

**S8** PERFORM GLOBAL FORECASTING DURING ANALYSIS PERIOD BY USING SUM OF ANNUAL DEMAND PATTERN AND APPROXIMATION FUNCTION OF TREND COMPONENT $\bar{Z} + \hat{T}$

# FIG. 3

START

S11 — CALCULATE RESIDUAL DIFFERENCE BETWEEN GLOBAL FORECASTING AND ACTUAL RESULT

S12 — EXTRACT FEATURE VECTOR FROM RESIDUAL DIFFERENCE

S13 — PERFORM REGRESSION LEARNING ON FEATURE VECTOR OF RESIDUAL DIFFERENCE

S14 — OBTAIN FORECASTING VALUE OF RESIDUAL DIFFERENCE

S15 — CALCULATE AND OUTPUT DEMAND FORECASTING VALUE BASED ON SUM OF FORECAST RESIDUAL DIFFERENCE AND GLOBAL FORECASTING

END

FIG. 4

| 4 MONTHS AGO | 5 MONTHS AGO | • • • | 13 MONTHS AGO | MONTH | CIRCULAR VARIABLE (sin) | CIRCULAR VARIABLE (cos) |
|---|---|---|---|---|---|---|
| -1.4009 | 0.6342 | • • • | 0.8755 | 9 | 0.0000 | -1.0000 |
| -0.1697 | -1.4009 | • • • | 1.5142 | 10 | 0.5000 | -0.8660 |
| -0.7201 | -0.1697 | • • • | -0.2593 | 11 | 0.8660 | -0.5000 |
| 0.8755 | -0.7201 | • • • | -2.1217 | 12 | 1.0000 | 0.0000 |
| 0.5588 | 0.8755 | • • • | -0.4675 | 1 | 0.8660 | 0.5000 |
| 1.0145 | 0.5588 | • • • | -0.3904 | 2 | 0.5000 | 0.8660 |
| -1.1663 | 1.0145 | • • • | -1.2239 | 3 | 0.0000 | 1.0000 |
| 0.1695 | -1.1663 | • • • | -0.0755 | 4 | -0.5000 | 0.8660 |

## FIG. 5

TIME (MONTH)

## FIG. 6

TIME (MONTH)

## FIG. 7

TIME (MONTH)

## FIG. 8

TIME (MONTH)

# FIG. 9

TIME (MONTH)

# FIG. 10

EP 4 235 534 A1

FIG. 11

ACTUAL
MEASUREMENT VALUE
FORECASTING VALUE

07/2017  01/2018  07/2018  01/2019  07/2019  01/2020  07/2020  01/2021  07/2021

# FIG. 12

LEARNING SYSTEM ~50

CONTROLLER ~51

STORAGE UNIT

RESIDUAL DIFFERENCE DATA ~52a

~52

LEARNING MODEL ~52b

INPUT UNIT ~53

## FIG. 13

```
        ┌─────────────┐
        │    START    │
        └─────────────┘
               │
               ▼
┌───────────────────────────────┐
│  INPUT RESIDUAL DIFFERENCE     │  ∼S21
│  DATA TO REGRESSION LEARNING   │
│  MODEL                         │
└───────────────────────────────┘
               │
               ▼
┌───────────────────────────────┐
│  EXECUTE REGRESSION LEARNING   │  ∼S22
└───────────────────────────────┘
               │
               ▼
        ┌─────────────┐
        │     END     │
        └─────────────┘
```

## FIG. 14

100

```
      101                            102
   ┌──────────────┐           ┌──────────────┐
   │  PROCESSOR   │           │    MEMORY    │
   └──────────────┘           └──────────────┘
          │                          │
          │                          │
   ───────┴──────────────────────────┴───────
                      │
              ┌──────────────┐
              │  INTERFACE   │  ∼103
              └──────────────┘
```

Europäisches
Patentamt

European
Patent Office

Office européen
des brevets

# EUROPEAN SEARCH REPORT

Application Number

EP 22 21 2777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Athul Anish .: "Time Series Analysis", , 24 November 2020 (2020-11-24), pages 1-21, XP093062016, Retrieved from the Internet: URL:https://medium.com/swlh/time-series-an alysis-7006ea1c3326 [retrieved on 2023-07-07] * page 1 - page 10 * ----- | 1-14 | INV. G06Q10/04 |
| A | FATOUMATA DAMA ET AL: "Time Series Analysis and Modeling to Forecast: a Survey", ARXIV.ORG, CORNELL UNIVERSITY LIBRARY, 201 OLIN LIBRARY CORNELL UNIVERSITY ITHACA, NY 14853, 26 September 2021 (2021-09-26), XP091047746, * abstract * * page 21 - page 41 * ----- | 1-14 | |
| A | US 2020/125471 A1 (GARVEY DUSTIN [US] ET AL) 23 April 2020 (2020-04-23) * paragraphs [0099] - [0100], [0142]; claim 1; figures 1-15 * ----- | 1-14 | TECHNICAL FIELDS SEARCHED (IPC) G06Q |

The present search report has been drawn up for all claims

| Place of search | Date of completion of the search | Examiner |
|---|---|---|
| Munich | 10 July 2023 | Diaz Calvo, Sonia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 2777

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | Publication date | Patent family member(s) | Publication date |
|---|---|---|---|
| US 2020125471 A1 | 23-04-2020 | NONE | |

For more details about this annex : see Official Journal of the European Patent Office, No. 12/82

**EP 4 235 534 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021057010 A